Europäisches Patentamt

European Patent Office

Office européen des brevets

(19)

(11) **EP 0 978 973 A1**

(12) **DEMANDE DE BREVET EUROPEEN**

(43) Date de publication:
**09.02.2000 Bulletin 2000/06**

(51) Int Cl.$^7$: **H04L 27/233**

(21) Numéro de dépôt: **99401988.3**

(22) Date de dépôt: **05.08.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **06.08.1998 FR 9810133**

(71) Demandeur: **ALCATEL**
**75008 Paris (FR)**

(72) Inventeurs:
• **Cueff, Valérie**
  **75007 Paris (FR)**
• **Terre, Michel**
  **75116 Paris (FR)**

(74) Mandataire: **Lamoureux, Bernard et al**
**COMPAGNIE FINANCIERE ALCATEL**
**Dépt. Propriété industrielle**
**30, avenue Kléber**
**75116 Paris (FR)**

(54) **Estimation du decalage en frequence pour la demodulation d'un paquet de symboles modules en phase**

(57)     L'invention concerne un procédé d'estimation du décalage en fréquence d'un paquet de symboles modulés en phase reçu avec une erreur de phase, comprenant :

-   l'application aux symboles du paquet reçu d'une correction de phase pour un ensemble de couples de décalages possibles en fréquence et en phase
-   le choix, parmi ces couples de décalages, du couple fournissant le paquet de symboles corrigés le plus vraisemblable, pour déterminer le décalage en fréquence du paquet reçu.

L'invention permet, par rapport aux solutions connues, une réduction des erreurs sur la fréquence estimée. Elle comprend avantageusement une étape de quantification des corrections de phases possibles, qui permet de réduire la complexité des calculs, sans dégrader les performances.

FIG_5

**Description**

La présente invention a pour objet un procédé d'estimation du décalage en fréquence d'un paquet de symboles modulés en phase reçus avec une erreur de phase.

L'invention concerne la démodulation des signaux modulés par déplacement de phase ou PSK (acronyme de l'anglais "phase shift keying"), et plus particulièrement l'estimation de décalage en fréquence et de phase nécessaires pour la démodulation de signaux en paquets, modulés par une modulation de phase, ou par une modulation de phase et d'amplitude. Elle s'applique au domaine des transmissions, pour la démodulation des signaux numériques transmis sous forme de paquets. Un canal de transmission numérique typique comprend une source binaire, un codeur, un modulateur qui émet dans un canal, un démodulateur en sortie de canal, et un décodeur qui fournit le signal binaire. Le codage de canal a pour but de réduire la puissance nécessaire pour atteindre un taux d'erreur bit donné. La modulation et la démodulation permettent la transmission dans le canal choisi. Dans la mesure où l'invention concerne la démodulation , les autres éléments du système de transmission - tels le codage de source et le décodage - ne font pas l'objet de plus d'explications.

M. Morelli et U. Mengali, Feedforward Frequency Estimation for PSK: a Tutorial Review, ETT vol. 9 n° 2 Mars-Avril 1998 contient une description du problème de synchronisation dans les démodulateurs pour des systèmes de transmissions numérique à modulation de phase en mode paquet. Ce document décrit en outre les solutions connues à ce problème.

Ce problème de la démodulation de signaux numériques modulés en phase et transmis en mode paquet se pose notamment pour les systèmes de transmission par satellites en accès multiple par division temporelle (TDMA), ou pour les systèmes terrestres de télécommunications cellulaires. Il s'agit d'un problème technique important dans le domaine des télécommunications.

Plus précisément, l'invention propose un procédé d'estimation du décalage en fréquence d'un paquet de symboles modulés en phase reçu avec une erreur de phase, comprenant :

- l'application aux symboles du paquet reçu d'une correction de phase pour un ensemble de couples de décalages possibles en phase et en fréquence.
- le choix, parmi ces couples de valeurs, du couple fournissant le paquet de symboles corrigés le plus vraisemblable, pour déterminer le décalage en fréquence et en phase du paquet reçu.

Dans un mode de mise en oeuvre, le procédé comporte en outre une étape de quantification des corrections de phases possibles.

De préférence, l'étape de choix comprend :

- le calcul d'une métrique entre le paquet des symboles reçus puis corrigés en phase et une estimation du paquet des symboles envoyés,
- la recherche d'une valeur minimale de cette métrique.

Dans un autre mode de mise en oeuvre, l'estimation du paquet des symboles envoyés est obtenue:

- pour les symboles connus, en reprenant le symbole émis, et
- pour les symboles inconnus, par décision ferme.

Avantageusement, la rotation de $e^{j2p/k}$, k entier naturel, laisse invariant l'ensemble des symboles possibles, et les valeurs possibles de la phase sont choisies dans une plage de [0, 2p/k[.

Dans un autre mode de mise en oeuvre, la correction de phase appliquée aux symboles, pour une valeur fm du décalage en fréquence et une valeur fk de la phase s'écrit $e^{-j(2pfm(p-1)Ts+fk)}$, avec p l'ordre du symbole et Ts le temps symbole.

De préférence, dans ce cas, les valeurs de l'argument $-(2pfm(p-1)Ts+fk)$ sont calculées sous forme de valeurs réduites, par exemple dans un intervalle [0, 2p[.

Le procédé peut encore comprendre une étape préalable de calcul et de stockage de toutes les corrections de phase possibles à appliquer à un symbole.

Le procédé peut encore comprendre une étape d'estimation du décalage en phase, comme la valeur de décalage en phase du dit couple fournissant le paquet de symboles corrigés le plus vraisemblable.

D'autres caractéristiques et avantages de l'invention apparaîtront à la lecture de la description qui suit de modes de réalisation de l'invention, donnée à titre d'exemple et en référence aux dessins annexés qui montrent:

- figure 1, un histogramme des erreurs résiduelles de fréquence normalisée dans un estimateur de l'art antérieur;

-    figure 2 un histogramme des erreurs résiduelles de fréquence normalisée dans un estimateur selon l'invention;
-    figure 3, un histogramme analogue à celui de la figure 1, pour une autre valeur du rapport signal sur bruit;
-    figure 4, un histogramme analogue à celui de la figure 2, pour une autre valeur du rapport signal sur bruit;
-    figure 5, un schéma synoptique d'un dispositif pour la mise en oeuvre de l'invention;
-    figure 6, un mode de réalisation du bloc de base de la figure 5.

Pour déterminer le décalage en fréquence, et le cas échéant en phase, d'un signal reçu sous forme d'un paquet sur un canal de transmission, l'invention propose de tester différents couples possibles du décalage en phase et du décalage en fréquence, et de retenir le couple le plus probable au sens d'un critère de maximum de vraisemblance. On peut ainsi déterminer une valeur du décalage en fréquence. Dans la suite de la description, l'invention est décrite en référence à l'exemple d'une modulation QPSK (acronyme de l'anglais Quaternary phase shift keying, en français modulation de phase à 4 états). Elle s'applique aussi bien à d'autres types de modulation, par exemple des modulations PSK avec un nombre de symboles différent, ou encore des modulations de phase et d'amplitude, du type QAM ou autres.

L'invention s'applique aux paquets présentant des symboles connus, comme aux paquets ne présentant aucun symbole connus. On note dans la suite N le nombre de symboles d'un paquet, Nc le nombre de symboles connus, avec $0 \leq Nc \leq N$ et Ni le nombre de symboles d'information, avec Ni = N - Nc.

L'invention propose donc de tester des valeurs possibles du décalage en fréquence, et des valeurs possibles de la phase. On détermine des valeurs possibles de décalage en fréquence, entre des valeurs minimale fmin et maximale fmax, avec par exemple fmin = -fmax. On peut ainsi simplement choisir de tester toutes les valeurs possibles de décalage en fréquence entre ces deux valeurs, avec un pas de df choisi en fonction des performances envisagées. Pour chaque valeur de fréquence, on détermine aussi différentes valeurs de phase f, entre 0 et 2p, ou dans une plage plus réduite, comme on l'explique plus bas. On peut de nouveau tester toutes les valeurs possibles avec un pas de df.

Pour nf valeurs possibles de décalage en fréquence, et nf valeurs possibles de phase, on peut donc tester nf.nf couples (à supposer que l'on teste l'ensemble des couples possibles). On calcule la vraisemblance de chacun des couples à tester, et on détermine de la sorte le couple de décalage en fréquence et phase le plus vraisemblable. On peut utiliser comme critère de vraisemblance toute métrique appropriée en fonction du codage de canal; dans la suite de la description, on donne un exemple en l'absence de codage de canal, et on utilise pour apprécier la vraisemblance la distance euclidienne par rapport aux symboles de la modulation QPSK.

Dans l'exemple d'une métrique euclidienne et d'une modulation QPSK, soit un couple (fm, fk) à tester. La correction de l'argument du p-ième symbole du paquet, noté sp, s'écrit

$$-i(2\pi fm(p-1)Ts + fk)$$

avec de façon classique j2 = -1

Le symbole corrigé s'écrit $C_{p,m,k} = s_p e^{-j(2\pi f_m(p-1)T_s + \phi_k)}$. On peut alors à partir des valeurs des symboles corrigés du paquet, déterminer la vraisemblance de la correction (fm, fk). Dans le cas le plus simple, sans codage de canal, on peut procéder de la façon suivante, pour les Nc symboles connus, et pour les Ni symboles inconnus.

Pour les Nc symboles connus émis, notés dans la suite ep, 1 = p = Nc, on calcule l'erreur quadratique $\varepsilon_{m,k}^{symboles\ connus}$ entre les symboles émis, et les symboles corrigés en phase. Cette erreur s'écrit:

$$\sum_{i=1}^{N_c} \left| C_{p,m,k} - e_p \right|^2$$

et correspond à la norme euclidienne du vecteur d'erreur entre les symboles émis (ep) et les symboles corrigés en phase pour le couple (fm, fk) à tester. On détermine ainsi, pour les symboles connus, et pour le couple de décalage en fréquence et de phase à tester, une valeur représentative de l'erreur sur les symboles reçus, et donc de la vraisemblance du couple à tester.

Pour les Ni symboles inconnus, l'invention, dans ce mode de réalisation, propose de procéder à un calcul du même genre, mais en prenant une décision ferme sur le symbole émis, en fonction de la valeur du symbole corrigé Cp,m,k. Dans le cas d'une modulation QPSK, la décision ferme s'effectue simplement en considérant le quadrant du plan complexe dans lequel se trouve le symbole corrigé. Typiquement:

pour 0=arg(Cp,m,k)<p/2, le symbole décidé Dp,m,k vaut e$_i$p/4;
pour p/2=arg(Cp,m,k)<p, le symbole décidé Dp,m,k vaut e$_i$3p/4;
pour p=arg(Cp,m,k)<3p/2, le symbole décidé Dp,m,k vaut e$_i$5p/4; et

pour 3p/2=arg(Cp,m,k)<2π, le symbole décidé Dp,m,k vaut e$_i$7p/4;

Il est clair que cette décision ferme dépend de la nature de la modulation envisagée, et s'adapte en fonction des symboles de la modulation. On calcule ensuite l'erreur quadratique ε$_{m,\,k}^{symboles\ inconnus}$ entre les symboles décidés, et les symboles corrigés en phase. Cette erreur s'écrit:

$$\sum_{i=1}^{N}\left|C_{p,m,k} - D_{p,m,k}\right|^{2}$$

et correspond à la norme euclidienne du vecteur d'erreur entre les symboles corrigés en phase pour le couple (fm, fk) à tester et les symboles résultant de la décision ferme. On détermine ainsi, pour les symboles inconnus, et pour le couple de décalage en fréquence et de phase à tester, une valeur représentative de l'erreur sur les symboles reçus, par rapport à la constellation la plus proche de symboles possibles. De nouveau, cette valeur est représentative de la vraisemblance du couple à tester. Par rapport à la solution proposée pour les symboles connus, on n'ajoute qu'une étape de décision ferme, et on utilise ensuite la même distance.

On constate que ce calcul de vraisemblance est susceptible d'être effectué quel que soit le nombre Nc de symboles connus dans le paquet. De nouveau, le calcul fourni à titre d'exemple s'applique en l'absence de tout codage de canal. Si l'on connaît le codage de canal utilisé, on peut remplacer l'étape de décision ferme par une étape de décodage du mot de code formé des symboles inconnus, et calculer la vraisemblance comme la métrique des symboles corrigés par rapport au mot de code résultat du décodage. On pourrait aussi dans ce cas procéder au décodage de l'ensemble du paquet, et calculer l'erreur ou la vraisemblance de façon globale, sans séparer symboles connus et symboles inconnus.

L'invention propose de choisir comme décalage de fréquence la valeur fm correspondant au couple (fm, fk) le plus vraisemblable. On détermine de la sorte un décalage en fréquence, qui permet la synchronisation du paquet.

Dans le mode de réalisation décrit, pour un calcul d'erreur correspondant à une distance euclidienne et un choix du symbole décidé par décision ferme, l'invention propose une simplification des calculs. En effet, le symbole décidé par décision ferme vaut

$$D_{p,m,k} = sign[\text{Re}(C_{p,m,k})]+ j^{*}\ sign[\text{Im}(C_{p,m,k})$$

où Re et Im sont respectivement les parties réelles et imaginaires du symbole reçu. Dans ce cas, l'erreur ep,m, k se décompose en trois termes

$$\varepsilon_{p,m,k} = \left|C_{p,m,k} - D_{p,m,k}\right|^{2} = \left|C_{p,m,k}\right|^{2} + \left|D_{p,m,k}\right|^{2} - 2^{*}\ \text{Re}(C_{p,m,k}^{*}\ D_{p,m,k}$$

Le premier terme ne dépend que du symbole reçu et non pas de l'hypothèse fréquence-phase, et peut donc n'être calculé qu'une seule fois. Le deuxième terme est constant et vaut 2 dans une modulation MPSK. Le troisième terme, pour le choix de Dp,m,k par décision ferme, vaut:

$$-2^{*}\ \text{Re}(C_{p,m,k}^{*}\ D_{p,m,k})= -2^{*}\ [\left|\text{Re}(C_{p,m,k})\right| + \left|\text{Im}(C_{p,m,k})\right|$$

ce qui permet un calcul plus simple. En outre, miminiser l'erreur ep,m,k revient en fait à minimiser ce troisième terme, et on simplifie ainsi considérablement les calculs.

Pour les symboles connus, les symboles émis sont de la forme e$_i$np/2, et les calculs des erreurs peuvent aussi se simplifier. De fait, les calculs correspondent, en fonction de la valeur du symbole émis, à une combinaison de changement de signe de la partie réelle et/ou de la partie imaginaire, avec le cas échéant une combinaison de la partie réelle et de la partie imaginaire. Comme dans le cas des symboles connus, on peut calculer les erreurs par des successions d'opérations simples sur les parties réelles et imaginaires des symboles reçus.

L'invention implique donc dans les faits des calculs plus simple qu'il n'apparaît de prime abord.

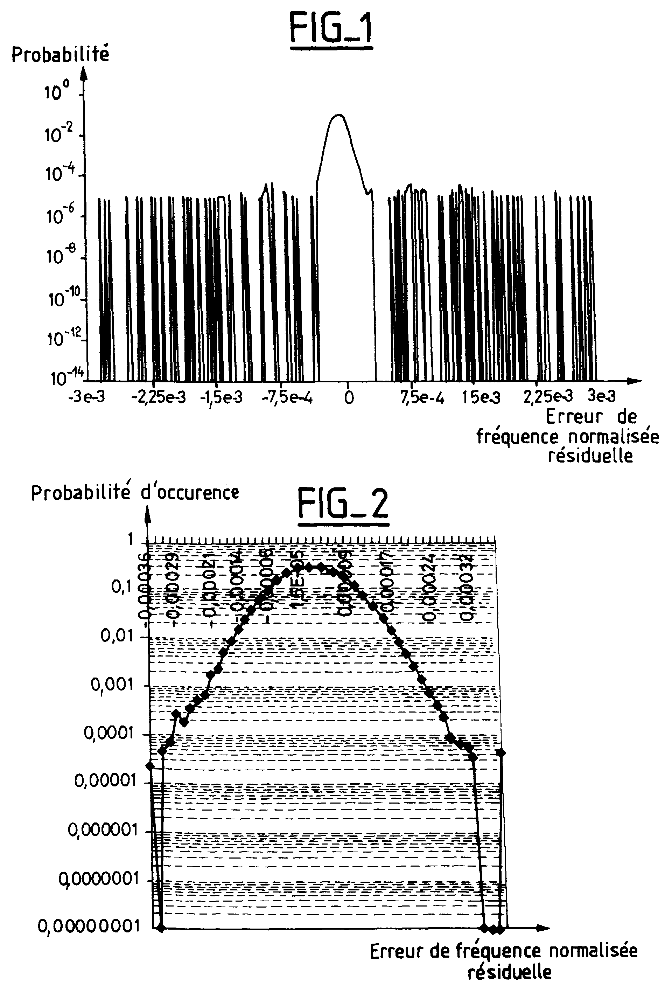

Les figures 1 à 4 montrent les résultats comparatifs obtenus selon le procédé de l'invention, par rapport aux méthodes connues. Dans ces figures, on a représenté non pas l'écart ou le décalage en fréquence df, mais l'écart en fréquence normalisé, qui est le produit de l'écart en fréquence df par le temps symbole Ts.

La figure 1 montre un histogramme des résultats obtenus par l'estimateur de Ryfe et Boorstyn décrit dans l'article de Morelli mentionné plus haut, dans les conditions suivantes:

modulation QPSK;

N = 450 symboles par paquet;

Nc = 16 symboles connus par paquet;

(Eb/N0)transmis = 0.0 dB, soit Es/N0 = 3.0 dB;

décalage en fréquence normalisée aléatoire de -dfTsmax à +dfTsmax avec dfTsmax =1.5 10-3.

On a représenté en abscisse le décalage en fréquence résiduel après l'application de l'algorithme. Ce décalage résiduel peut atteindre 2* dfTsmax, si la fréquence à estimer est de -dfTsmax et que la fréquence estimée est +dfTsmax..La probabilité est indiquée en ordonnée. Les résultats de la figure 1 correspondent au test de 90 000 paquets. On constate que 150 paquets présentaient un écart en fréquence normalisé résiduel de 4,5.10-4, ce qui commence à être beaucoup pour un paquet d'environ 500 symboles pour une démodulation ou un décodage ultérieur, quel que soit le décodage utilisé.

La figure 2 montre, avec les mêmes conventions, et pour les mêmes conditions, les résultats obtenus selon l'invention, après avoir reçu 90 000 paquets. On n'a porté en abscisses que les décalages résiduels de fréquence normalisée entre ± 3.6 10-4, dans la mesure où les valeurs obtenus pour tous les paquets testés tombaient dans cette plage. On constate d'emblée que l'erreur résiduelle est largement inférieure à celle obtenue dans le procédé de l'art antérieur; en outre, cette erreur résiduelle est suffisamment faible pour permettre un décodage ultérieur.

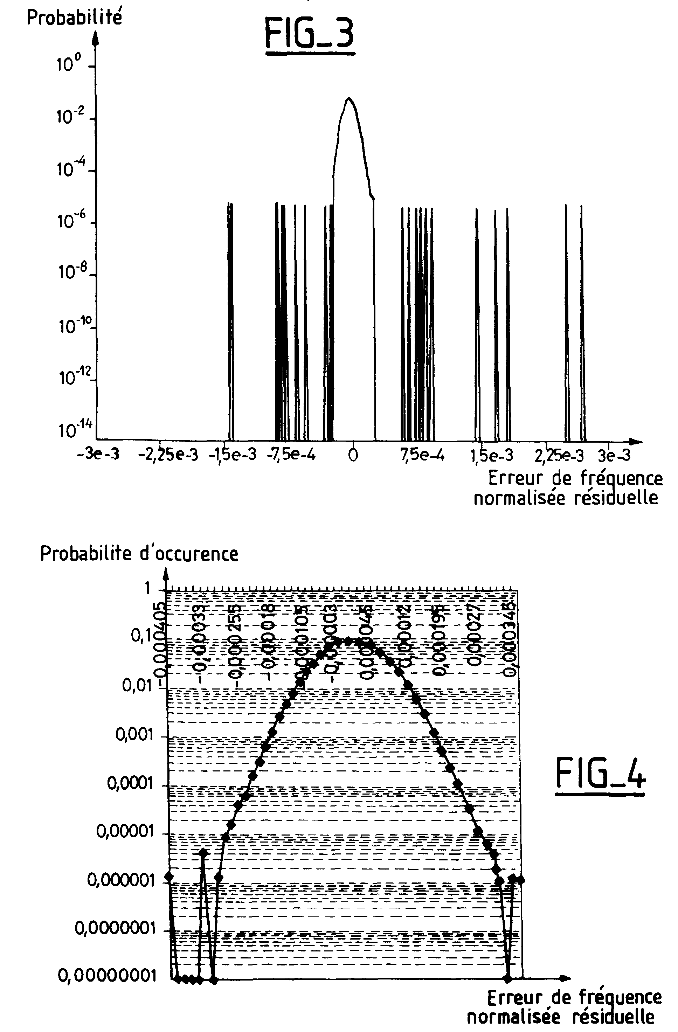

La figure 3 montre des résultats similaires à ceux de la figure 1, mais pour une valeur de Eb/N0 de 0.5 dB, et pour 100 000 paquets testés. La figure 4 montre les résultats de l'invention, pour cette même valeur du rapport signal sur bruit, et après avoir testé 700 000 paquets. On constate encore que l'invention permet de fournir des résultats plus précis et plus fiables.

Les résultats peuvent aussi s'exprimer en termes du taux de paquets perdus, ou CLR (acronyme de l'anglais "cell loss rate"). Pour le calcul, on a supposé qu'un paquet était perdu lorsque l'erreur sur la fréquence normalisée dépassait 4.5 10-4 :

selon l'art antérieur :

CLR = 1.6.10-3, pour 90 000 paquets testés et Es/N0 = 3.0 dB;
CLR = 2.2.10-4, pour 100 000 paquets testés et Es/N0 = 3.5 dB;
CLR = 6.0.10-6, pour 1 500 000 paquets testés et Es/N0 = 4.0 dB;

selon l'invention:

CLR nul, pour 90 000 paquets testés et Es/N0 = 3.0 dB;
CLR nul, pour 700 000 paquets testés et Es/N0 = 3.5 dB;

On constate que par rapport à l'estimateur de Ryfe et Boorstyn décrit dans l'article de Morelli mentionné plus haut, l'invention permet d'obtenir des résultats plus précis; en outre, on s'affranchit de la limitation provoquée par les erreurs ou "outliers"; l'invention peut donc être appliquée sans craindre, comme dans l'algorithme précédant, d'effet de seuil.

L'invention s'applique ainsi à la détermination du décalage en fréquence sur un paquet de signaux modulés en phase. On décrit maintenant différents modes de réalisation de l'invention, qui permettent de simplifier les calculs, et d'améliorer les performances de l'estimateur de l'invention, en terme de rapidité et de facilité de mise en oeuvre.

Dans un mode de réalisation, l'invention propose, de ne procéder à des tests de la phase que sur une plage réduite, de p/2 dans l'exemple d'une modulation QPSK pour les symboles inconnus. En effet, si l'on procède à une décision ferme, on choisit le symbole en fonction du quadrant du plan complexe, et l'erreur calculée est une fonction présentant une période de p/2; autrement dit, si l'on tourne de np/2 le symbole redressé, on tourne aussi de la même phase le symbole décidé, et l'erreur quadratique entre les deux ne varie pas. Il suffit donc de tester les phases possibles sur une plage de [0, p/2] pour une modulation QPSK. Dans l'exemple d'une modulation MPSK, où les symboles s'écrivent e$_i$2kp/m, on peut de la même façon ne tester les phases possibles que sur une plage de [0, 2p/m]. Plus généralement, si la constellation de symboles utilisée pour la modulation est invariante par rotation de 2p/z, z étant un entier naturel supérieur à 1, on ne procède à un test des phases possibles que sur une plage de [0, 2p/z].

Pour les symboles connus, dans le cas de la modulation QPSK, on procède à des tests de phase sur toute la plage de [0, 2p], dans la mesure où le symbole émis est compris dans cette plage.

Dans tous les cas, la plage pour les tests de phase dépend de la périodicité de la fonction d'erreur calculée à partir des symboles connus ou inconnus. Cette périodicité dépend aussi le cas échéant du choix du symbole reçu - une décision ferme dans l'exemple de la modulation QPSK conduit à une périodicité de p/2.

Dans l'exemple de la modulation QPSK, on peut calculer séparément l'erreur sur les symboles connus, et l'erreur sur les symboles inconnus. Dans ce cas, une valeur d'erreur $\varepsilon_{m,k}^{symboles\ inconnus}$ sur les symboles inconnus, pour un couple (fm, fk) pourrait être utilisée pour le calcul de l'erreur sur l'ensemble du paquet, pour les couples

(fm, fk)
(fm, fk+p/2)
(fm, fk+p)
(fm, fk+3p/2).

On évite de la sorte d'effectuer plusieurs fois des calculs dont les résultats sont identiques. Il suffit alors, pour ces quatre couples de calculer l'erreur sur les symboles connus, et de l'additionner à l'erreur $\varepsilon_{m,k}^{symboles\ inconnus}$ sur les symboles inconnus.

Dans un autre mode de réalisation, l'invention propose de limiter la valeur des déphasages à appliquer. En effet, pour le p-ième symboles, les déphasages à appliquer ont pour argument -(2!pfm(p-1)Ts + fk), et sont 2p-périodiques. Il est avantageux de calculer ces déphasages modulo 2p, en les ramenant dans une plage de [0, 2p[, de sorte à limiter l'amplitude des signaux stockés. Cette solution est particulièrement avantageuse dans la mesure où les arguments des déphasages à appliquer sont calculés à l'avance et stockés, comme expliqué plus bas. Dans le cas d'une modulation QPSK, on peut encore limiter l'amplitude des signaux stockés, comme expliqué plus haut; de la sorte pour les symboles inconnus, on pourrait ramener les arguments des déphasages à appliquer entre [0, p/2[. Dans tous les cas, on utilise donc pour la mise en oeuvre de l'invention non pas les arguments -(2pfm(p-1)Ts + fk), mais les valeurs réduites de ces arguments, par exemple dans un intervalle [0, 2p[ pour les symboles connus, et dans un intervalle [0, 2p/k[ pour les symboles inconnus dans le cas d'une modulation kPSK.

L'invention propose en outre de quantifier les valeurs de arguments des déphasages à appliquer pour tester les différentes valeurs possibles de couples de décalage en fréquence et de phase. Ainsi, pour un argument de -(2pfm (p-1)Ts + fk), qui est fonction du rang du symbole, du décalage en fréquence fm et de la phase fk, on peut choisir une quantification, par exemple avec un pas de 2p/k, k entier, et ne calculer de la sorte que k valeurs possibles de la correction à appliquer $e^{-j(2\pi f_m(p-1)T_s+\phi_k)}$. On évite dans ce cas des calculs pour chaque symbole et pour chaque couple à traiter. De nouveau, cette quantification est particulièrement avantageuse dans le cas d'un stockage des valeurs des corrections à apporter aux symboles reçus. Ce mode de réalisation se combine avantageusement avec le mode de réalisation décrit plus haut, et on ne quantifie les valeurs de la phase que sur la plage nécessaire.

Ainsi, dans le cas de tests sur une plage de fréquence (en écart de fréquence normalisé) de [-1,5.10-3, +1,5.10-3], avec un pas de 7,5.10-6 et de test en phase sur une plage de [0, 2p[ avec un pas de p/(2*15), on calculerait pour chaque symbole du paquet 40 * 60 = 2400 symboles corrigés.

L'application d'une quantification des arguments, avec un pas de 2° permet de ne calculer que 180 arguments, soit autant de valeurs possibles de la correction ou déphasage à appliquer à un symbole, et autant de valeurs possibles du symbole corrigé. En outre, si l'on réduit la plage de phase du fait de la périodicité de l'erreur, comme expliqué plus haut, on réduit encore le nombre de corrections. Dans le cas d'une modulation QPSK et d'une décision ferme, et donc d'une périodicité de p/2, il suffit pour chaque symbole de calculer 45 valeurs possibles de la phase de la correction à appliquer au symbole, et donc de calculer pour chaque symbole reçu, 45 symboles corrigés.

De nouveau, cette solution est particulièrement avantageuse si l'on choisit de calculer à l'avance les corrections possibles et de les stocker, comme décrit ci-dessous. La quantification ne réduit pas la précision de la détermination de fréquence selon l'invention. Un pas de quantification sur les arguments de 2° conduit à une erreur maximale sur l'argument de 1°; l'influence de la quantification sur les résultats obtenus est faible: en quantifiant les valeurs de fréquence sur 10 bits, on ne voit pas de dégradation des performances.

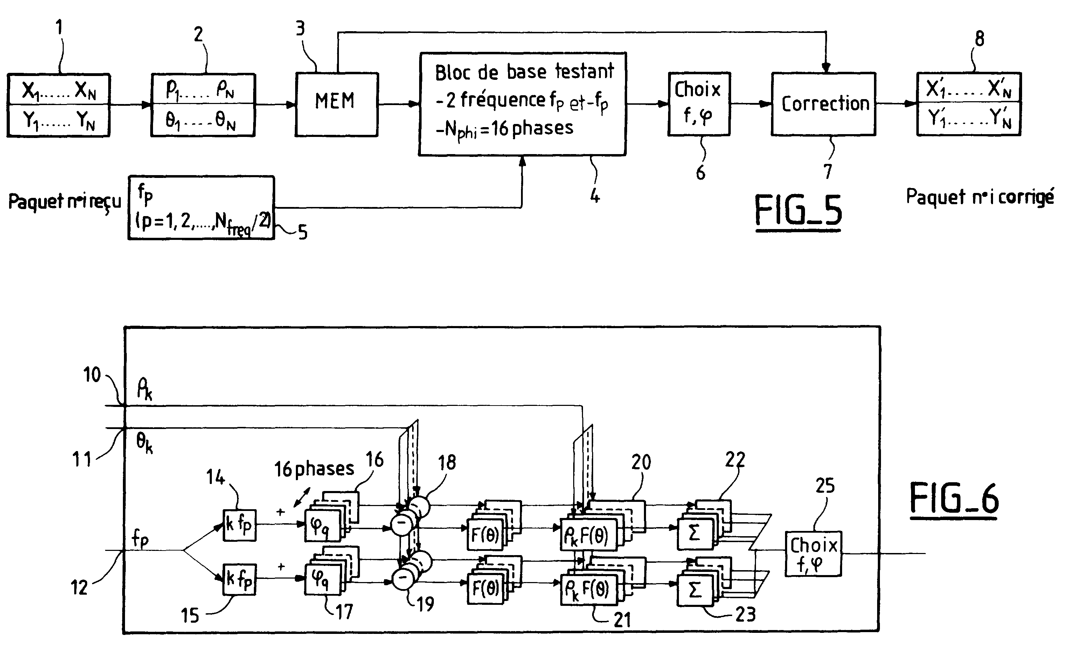

On décrit maintenant une architecture possible pour la mise en oeuvre de l'invention. Dans cette architecture, on préfère recalculer les différentes valeurs des erreurs; cette implémentation peut s'avérer plus simple dans certaines configurations de d'ASIC (circuits intégrés spécifiques à une application) où les capacités mémoires sont limitées. La figure 5 montre un schéma synoptique de cette architecture. Dans le dispositif de la figure 5, on prend nf =16 et on traite des hypothèses de fréquence entre -fmax et +fmax. Cette architecture repose sur un bloc de base, qui traite un paquet, pour nf=16 hypothèses de phase et deux hypothèses de fréquence. Le bloc de base sert nf/2 fois par paquet.

Le premier bloc 1 représente la réception des symboles sp du paquet, qui sont traités sous forme complexe, avec une partie réelle Xp et une partie imaginaire Yp.

Le deuxième bloc 2 représente le passage en coordonnées polaires (rp, qp).

Le troisième bloc 3 représente le stockage des symboles reçus, en coordonnées polaires.

Le quatrième bloc 4 est le bloc de base, qui teste 2 fréquences fp et -fp, pour les 16 valeurs possibles de phase. Le bloc reçoit les symboles sp en coordonnées polaires, depuis le troisième bloc 3, et reçoit depuis un cinquième bloc 5 les valeurs possibles de la fréquence fp, p entier variant de 1 à nf/2. Le bloc 4 fournit en sortie une valeur de fréquence et de phase minimale, et une erreur correspondante, pour les 2 fréquences et les 16 phases traitées. Ces valeurs sont stockées dans un sixième bloc 6.

Lorsqu'une valeur possible fp de fréquence est testée dans le bloc 4, la valeur de fréquence choisie ±fp est stockée dans le cinquième bloc, en même temps que la phase fk correspondante, et que l'erreur em,k sur le paquet. Lors de test de la fréquence suivante, les valeurs sont remplacées si l'erreur nouvelle est plus faible. Après avoir balayé les valeurs possibles de la fréquence, on dispose dans le sixième bloc de l'hypothèse de fréquence et de phase la plus vraisemblable.

On procède alors, comme symbolisé par le septième bloc 7 à la correction des symboles, à partir des symboles stockés, et on fournit comme indiqué dans le huitième bloc 8 les symboles corrigés s'p = (X'p, Y'p), qui peuvent alors être utilisés pour le décodage de canal, s'il y en a un.

La figure 6 montre un mode de réalisation du bloc de base 4 de la figure 5, pour le traitement d'un symbole d'ordre k. Sont représentés en 10, 11 et 12 les arrivées des rk, qk; et fp. La fréquence fp est d'abord multipliée par $\pm$ (k-1)Ts, comme indiqué en 14 et 15. Les deux valeurs obtenues sont ajoutées aux 16 valeurs possibles de phase f1 à f16, nf=16, comme symbolisé en 16 et 17. On obtient ainsi 2*16 arguments possibles de la correction de phase. Ces arguments sont soustraits de l'argument qk du symbole, comme symbolisé en 18 et 19.

On calcule la fonction F(q), qui vaut

$$F(\theta_k) = \frac{[|Re(C_{p,m,k})| + |Im(C_{p,m,k})|]}{\rho_k} = |\cos \theta_k| + |\sin \theta_k|$$

Cette quantité est multipliée par rk, comme symbolisé en 20 et 21. Comme expliqué plus haut, minimiser l'erreur ep,m,k revient à minimiser -2*rk*F(q), soit à maximiser r!k*F(q). Cette quantité calculée pour le symbole d'ordre k est ajoutée à la somme des rk*F(q) pour les k-1 symboles précédents, comme représenté en 22 et 23.

Après avoir reçu tous les symboles, on a ainsi calculé une quantité dont la maximisation est équivalente à la minimisation de l'erreur em,k.

On peut choisir, pour une valeur fp de fréquence, la valeur $\pm$fp et la phase fk maximisant

$$\sum_{k=1}^{N} \rho_k F(\theta)$$

comme symbolisé dans le bloc 25, et transmettre en sortie le couple retenu et la valeur correspondante de l'erreur.

L'architecture des figures 5 et 6 peut être implémentée par exemple dans un circuit imprimé du type ASIC qui permet de traiter des paquets de 400 ou 500 symboles, avec un temps symbole de l'ordre de la microseconde. Le traitement total, pour 40 hypothèses de fréquence et 16 hypothèses de phase, s'effectue pendant une durée inférieure à celle du paquet.

On décrit maintenant une autre architecture possible pour la mise en oeuvre de l'invention; dans cette architecture, on privilégie la présence de mémoires. L'invention propose donc dans ce cas de calculer au départ, et une fois pour toutes, les différentes valeurs des corrections de phase des symboles corrigés; cette solution est particulièrement avantageuse dans le cas où les arguments des corrections de phase possibles sont quantifiées, et est décrite dans ce cas.

En effet, les corrections de phase $e^{-j(2\pi f_m)(p-1)T_s + \phi_k)}$ ne dépendent pas de la valeur du symbole sp reçu, mais uniquement du rang du symbole, et du couple (fm, fk) de décalage en fréquence et de phase à tester. On peut donc calculer, pour l'ensemble des triplets (p, m, k) les valeurs possibles du décalage. Dans le cas d'une quantification, on peut commencer par calculer les valeurs quantifiées des corrections de phase - 180 valeurs possibles par symbole connu, dans l'exemple donné plus haut-. Une fois construit un tableau des valeurs possibles, on peut facilement, lors de la réception d'un nouveau paquet, aller chercher dans le tableau les valeurs de déphasages à appliquer. Dans l'exemple d'une modulation QPSK, le nombre de valeurs possibles est de tf = 45 pour les symboles inconnus, et de 4tf = 180 pour les symboles connus, pour une quantification des arguments avec un pas de 2°. En numérotant dans l'ordre croissant les phases quantifiées à tester, la phase fl d'ordre I vaut

$$\phi_l = \frac{l}{t_\phi} * \frac{\pi}{2}.$$

Pour un symbole inconnu, on teste les phases de l=0 à l=tf, et la phase maximale vaut p/2. Pour un symbole connu, on teste les phases de l=0 à l=4tf, et la phase maximale vaut 2p. On peut alors stocker dans un tableau Tmém les numéro d'ordre des phases pour chacun des couples (fm, fk), pour chacun des symboles du paquet. On obtient un tableau de N*nf*nf valeurs entières.

Lors de la réception d'un paquet, on commence par calculer les valeurs possibles des symboles corrigés; pour les symboles inconnus, on remplit un tableau Ti de Ni*fi valeurs possibles des symboles corrigés; pour les symboles connus, on remplit un tableau Tc de Nc*4tf valeurs possibles des symboles corrigés.

Le calcul des erreurs peut alors s'effectuer, pour un couple (fm, fk) donné en considérant dans le tableau Tmém la ligne du tableau correspondant au couple (fm, fk); pour obtenir la valeur du p-ième symbole corrigé, il suffit :

- de prendre l'information porté dans la p-ième colonne du tableau Tmém, i. e. le numéro de l'argument quantifié du déphasage à appliquer, et
- de regarder dans le tableau Ti ou Tc, selon que le symbole est connu ou non, à l'intersection de la ligne correspondant au numéro d'ordre de la phase relevé dans le tableau Tmém, et de la colonne correspondant au numéro d'ordre p du symbole.

On pourrait aussi procéder dès le départ au calcul et au stockage des erreurs dans les tableaux Ti et Tc. Ceci présenterait l'avantage de stocker des valeurs réelles et non pas complexes. On pourrait encore, comme indiqué plus haut, procéder au calcul pour une phase donnée fk, pour les symboles connus, puis calculer l'erreur correspondante sur les symboles inconnus, et stocker cette erreur pour le calcul de l'erreur sur le paquet pour les phases fk + np/2, avec n=0, 1, 2 ou 3.

Ce mode de réalisation permet de limiter les calculs, dans la mesure où les valeurs des symboles corrigés ne sont calculées qu'une fois. Il est particulièrement avantageux dans la mesure où l'on dispose de capacité mémoire importantes.

Dans les modes de réalisation mentionnés plus haut, l'estimation de la phase n'est pas discutée en détail. L'invention fournit, en même temps qu'une valeur estimée du décalage en fréquence, une valeur de la phase fn; si le paquet ne comporte que des symboles inconnus, cette valeur de phase présente pour une modulation QPSK une ambiguïté de np/2, avec n entier, du fait de l'invariance des symboles de la modulation par rotation de np/2. Cette ambiguïté peut être levée si le paquet présente des symboles connus. Pour certains codage de canal, et pour des codages différentiels, l'ambiguïté de phase n'est pas gênante et n'a pas besoin d'être levée.;. L'invention permet d'assurer aussi pour la phase une précision supérieure à celle de l'art antérieur.

L'invention a été décrite en référence à une modulation QPSK. Elle s'applique plus généralement à toute modulation de phase, ou à toute modulation d'amplitude et de phase. On peut notamment mentionner les modulations MPSK et les modulations QAM. Elle s'applique non seulement en l'absence de codage de canal, comme dans le mode de réalisation décrit plus haut, mais aussi pour des codages de canal de toute nature. Dans le cas de codes en bloc, on peut calculer le maximum de vraisemblance par la métrique par rapport au mot de code le plus proche.

D'autre part, si on utilise certains codes, l'ambiguïté de phase peut ne pas être gênante. Dans ce cas, l'invention permet de déterminer l'écart de fréquence, ce qui suffit pour le décodage.

Le choix des hypothèses de fréquences et de phase fm et fk pour la mise en oeuvre de l'invention dépend des applications de l'invention. Le choix du pas de fréquence et du pas de phase dépend aussi de l'application. Les choix s'effectuent en fonction de la précision requise, et du nombre de calcul acceptable.

## Revendications

**1.** Procédé d'estimation du décalage en fréquence d'un paquet de symboles modulés en phase reçu avec une erreur de phase, comprenant :

- l'application aux symboles du paquet reçu d'une correction de phase pour un ensemble de couples de décalages possibles en fréquence et en phase
- le choix, parmi ces couples de décalages, du couple fournissant le paquet de symboles corrigés le plus vraisemblable, pour déterminer le décalage en fréquence du paquet reçu.

**2.** Procédé selon la revendication 1, caractérisé en ce qu'il comporte en outre une étape de quantification des corrections de phases possibles.

**3.** Procédé selon la revendication 1 ou 2, caractérisé en ce que l'étape de choix comprend :

- le calcul d'une métrique entre le paquet des symboles reçus et corrigés en phase et une estimation du paquet des symboles envoyés,
- la recherche d'une valeur minimale de cette métrique.

**4.** Procédé selon la revendication 3, caractérisé en ce que l'estimation du paquet des symboles envoyés est obtenue:

- pour les symboles connus, en reprenant le symbole émis, et

- pour les symboles inconnus, par décision ferme.

5. Procédé selon l'une des revendications 1 à 4, caractérisé en ce que la rotation de ei2p/k, k entier naturel, laisse invariant l'ensemble des symboles possibles, et en ce que les valeurs possibles de la phase sont choisies dans une plage de [0, 2p/k[.

6. Procédé selon l'une des revendications 1 à 5, caractérisé en ce que la correction de phase appliquée aux symboles, pour une valeur fm du décalage en fréquence et une valeur fk de la phase s'écrit e$_{\lnot}$(2pfm(p-1)Ts+fk), avec p l'ordre du symbole et Ts le temps symbole.

7. Procédé selon la revendication 6, caractérisé en ce que les valeurs de l'argument -(2pfm(p-1)Ts+fk) sont calculées sous forme de valeurs réduites, par exemple dans un intervalle [0, 2p[.

8. Procédé selon l'une des revendications 1 à 7, caractérisé en ce qu'il comprend une étape préalable de calcul et de stockage de toutes les corrections de phase possibles à appliquer à un symbole.

9. Procédé selon l'une des revendications 1 à 8, caractérisé en ce qu'il comporte une étape d'estimation du décalage en phase, comme la valeur de décalage en phase du dit couple fournissant le paquet de symboles corrigés le plus vraisemblable.

## FIG_1

## FIG_2

FIG_3

Probabilité

$10^{0}$

$10^{-2}$

$10^{-4}$

$10^{-6}$

$10^{-8}$

$10^{-10}$

$10^{-12}$

$10^{-14}$

-3e-3  -2,25e-3  -1,5e-3  -7,5e-4  0  7,5e-4  1,5e-3  2,25e-3  3e-3

Erreur de fréquence
normalisée résiduelle

Probabilité d'occurence

1

0,1

0,01

0,001

0,0001

0,00001

0,000001

0,0000001

0,00000001

FIG_4

Erreur de fréquence
normalisée résiduelle

**FIG_5**

**FIG_6**

Office européen
des brevets

**RAPPORT DE RECHERCHE EUROPEENNE**

Numéro de la demande

EP 99 40 1988

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 380 876 A (TOSHIBA) 8 août 1990 (1990-08-08) * colonne 5, ligne 58 - colonne 6, ligne 19 * --- | 1-9 | H04L27/233 |
| X | EP 0 606 163 A (NEC) 13 juillet 1994 (1994-07-13) * colonne 9, ligne 56 - colonne 11, ligne 41 * --- | 1-9 | |
| X | WO 93 11605 A (COMMUNICATIONS SATELLITE CORPORATION) 10 juin 1993 (1993-06-10) * page 15, alinéa 2 * --- | 1-9 | |
| X | EP 0 851 640 A (NOKIA MOBILE PHONES) 1 juillet 1998 (1998-07-01) * page 3, ligne 30 - ligne 36 * --- | 1-9 | |
| A | EP 0 533 208 A (NEC) 24 mars 1993 (1993-03-24) * page 4, ligne 5 - ligne 16 * --- | 1-9 | |
| | | | DOMAINES TECHNIQUES RECHERCHES (Int.Cl.7) |
| A | THORPE, MCLANE: "A hybrid phase/data Viterbi demodulator for encoded CPFSK modulation" IEEE GLOBAL TELECOMMUNICATIONS CONFERENCE. CONFERENCE,28 novembre 1983 (1983-11-28) - 1 décembre 1983 (1983-12-01), pages 754-758, XP002097468 New York, US * page 755, colonne de gauche, dernier alinéa - colonne de droite, alinéa 1 * ----- | 1-9 | H04L |

Le présent rapport a été établi pour toutes les revendications

| Lieu de la recherche | Date d'achèvement de la recherche | Examinateur |
|---|---|---|
| LA HAYE | 18 novembre 1999 | Scriven, P |

**ANNEXE AU RAPPORT DE RECHERCHE EUROPEENNE
RELATIF A LA DEMANDE DE BREVET EUROPEEN NO.**

EP 99 40 1988

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-11-1999

| Document brevet cité au rapport de recherche | | Date de publication | Membre(s) de la famille de brevet(s) | | Date de publication |
|---|---|---|---|---|---|
| EP 0380876 | A | 08-08-1990 | DE | 68925692 D | 28-03-1996 |
| | | | DE | 68925692 T | 06-02-1997 |
| | | | JP | 2256323 A | 17-10-1990 |
| | | | US | 5311523 A | 10-05-1994 |
| EP 0606163 | A | 13-07-1994 | JP | 6205062 A | 22-07-1994 |
| | | | US | 5511097 A | 23-04-1996 |
| WO 9311605 | A | 10-06-1993 | EP | 0614582 A | 14-09-1994 |
| EP 0851640 | A | 01-07-1998 | GB | 2320864 A | 01-07-1998 |
| | | | JP | 10210093 A | 07-08-1998 |
| EP 0533208 | A | 24-03-1993 | JP | 2765600 B | 18-06-1998 |
| | | | JP | 5083313 A | 02-04-1993 |
| | | | AU | 655563 B | 22-12-1994 |
| | | | AU | 2531592 A | 10-06-1993 |
| | | | CA | 2078705 A,C | 20-03-1993 |
| | | | US | 5268647 A | 07-12-1993 |

EPO FORM P0460

Pour tout renseignement concernant cette annexe : voir Journal Officiel de l'Office européen des brevets, No.12/82